**Europäisches Patentamt**

**European Patent Office**

**Office européen des brevets**

(19)

(11) Veröffentlichungsnummer: **0 011 153**
**B1**

(12) **EUROPÄISCHE PATENTSCHRIFT**

(45) Veröffentlichungstag der Patentschrift: **07.12.83**

(21) Anmeldenummer: **79104065.2**

(22) Anmeldetag: **19.10.79**

(51) Int. Cl.³: **H 04 Q 11/04, H 04 Q 3/54**

(54) Verfahren zur Übertragung von Informationen zwischen Einrichtungen einer indirekt gesteuerten Vermittlungsanlage, insbesondere Fernsprechvermittlungsanlage.

(30) Priorität: **14.11.78 DE 2849371**

(43) Veröffentlichungstag der Anmeldung:
**28.05.80 Patentblatt 80/11**

(45) Bekanntmachung des Hinweises auf die Patenterteilung:
**07.12.83 Patentblatt 83/49**

(84) Benannte Vertragsstaaten:
**AT CH DE FR GB IT NL SE**

(56) Entgegenhaltungen:
**EP - A - 0 006 132**
**DE - A - 2 526 115**
**DE - A - 2 748 580**
**FR - A - 2 298 915**
**FR - A - 2 371 841**

**1978 INTERNATIONAL CONFERENCE ON COMMUNICATIONS, Band 2, 4-7 Juni 1978, Toronto, CA, CESARATTO et al.: "DMS-200 control structure", Seiten 32.2.1 bis 32.2.5 INTERNATIONAL SWITCHING SYMPOSIUM 25-29 Oktober 1976, Kyoto, JP, SKAPERDA: "Generic digital switching system", Seiten 233.4.1 bis 223.4.8**

(73) Patentinhaber: **SIEMENS AKTIENGESELLSCHAFT Berlin und München Wittelsbacherplatz 2 D-8000 München 2 (DE)**

(72) Erfinder: **Müller, Helmut, Dipl.-Ing. Meisenweg 3 D-8033 Planegg (DE)**
Erfinder: **von Ow, Hans-Peter, Dr.-Ing. Starnbergerstrasse 11 D-8000 München 71 (DE)**
Erfinder: **Rambold, Thomas, Dipl.-Ing. Guardinistrasse 139 D-8000 München 70 (DE)**
Erfinder: **Werres, Bernhard, Dipl.-Ing. Benediktenwandstrasse 23 D-8000 München 90 (DE)**

(56) Entgegenhaltungen:
**PROCEEDINGS OF THE IEEE, Band 65, Nr. 9, September 1977, New York, US, ROSS et al.: "Design approaches and performance criteria for integrated voice/data switching", Seiten 1283 bis 1295 TELCOM REPORT, Band 2, Heft 3, Juni 1979, Berlin, DE, SUCKFULL: "Architektur einer neuen Linie digitaler öffentlicher Fernsprechvermittlungen", Seiten 174 bis 183**

# 0011153

## Verfahren zur Übertragung von Informationen zwischen Einrichtungen einer indirekt gesteuerten Vermittlungsanlage, insbesondere Fernsprechvermittlungsanlage

Bekanntlich sind in Vermittlungsanlagen Änderungen des Betriebszustandes von zugehörigen Einrichtungen zu erfassen, damit hiermit zusammenhängende Vermittlungsvorgänge abgewickelt werden können. Dabei werden z.B. Abfrageinformationen verwendet, die dann mit früheren Abfrageinformationen, die von derselben Einrichtung stammen, zur Auswertung verglichen werden. Abhängig von den Vergleichsergebnissen werden dann Betriebsvorgänge in der Vermittlungsanlage abgewickelt (siehe DE—A—14 37 576, 23 17 400; DE—C—12 13 008). Bei solchen Vermittlungsanlagen wird das Abfragen der Einrichtungen direkt mit der Auswertung der erhaltenen Abfrageinformationen verbunden, es wird also jeweils zwischen dem Abfragen zweier verschiedener Einrichtungen der Vergleich aufeinanderfolgender Abfrageinformationen derselben Einrichtung vorgenommen und daraufhin beispielsweise fallweise die Adresse einer Einrichtung abgespeichert, bei der sich der Betriebszustand geändert hat, was sich aufgrund veränderter Abfrageinformationen ergeben hat (siehe DE—C—12 13 008). Es ist auch bekannt, gegebenenfalls das Abfragen zu unterbrechen, um jeweils die erforderlichen Betriebsvorgänge abzuwickeln, die sich aufgrund der erhaltenen Abfrageinformationen ergeben (siehe DE—B—14 37 576, Seite 74).

Bei dieser bekannten Technik ist vorgesehen, eine weitere Verarbeitung aufgrund von Abfrageinformationen im Steuerwerk nur dann durchzuführen, wenn es sich um veränderte Informationen handelt. Eine derartige Technik ist auch bereits für eine indirekt gesteuerte Vermittlungsanlage vorgeschlagen worden, die ein Steuerwerk hat, für das von mehreren anderen Einrichtungen stammende Informationen regelmäßig in bestimmten Zeitabständen für ihre weitere Verarbeitung aufgenommen werden, wozu die Informationen zunächst gespeichert und aufeinanderfolgende Informationen, die von denselben Einrichtungen stammen, miteinander verglichen werden, bevor aufgrund von Informationsänderungen Informationen vom Steuerwerk weiterverarbeitet werden. Dabei kann es sich auch um eine Fernsprechvermittlungsanlage handeln, die mit Zeitkanalkopplern ausgerüstet ist und bei der zwischen Teilnehmern auszutauschende Nachrichten im PCM-Bertrieb über Zeitmultiplexkanäle übertragen werden.

Die Erfindung betrifft nun ein Verfahren zur Übertragung von Informationen zwischen Einrichtungen einer indirekt gesteuerten Vermittlungsanlage über Zeitmultiplexkanäle mit jeweils mehrfacher Wiederholung der Informationen, insbesondere für eine Fernsprechvermittlungsanlage, die mit Zeitkanalkopplern ausgerüstet ist.

Ein Verfahren dieser Art ist bereits durch die deutsche Offenlegungsschrift 2 748 580 bekannt. In einer mit einem solchen Verfahren arbeitenden Vermittlungsanlage können nun aber in mehr oder weniger großem zeitlichen Abstand auch Informationen zu übertragen sein, die inhaltlich übereinstimmen, und wobei jede dieser zu übertragenden Informationen trotz der Überinstimmung erneut einen Verarbeitungsvorgang auszulösen hat. Hierbei kann es sich z.B. um Prüfbefehle handeln, die von einer zentralen Steuereinrichtung zu einer peripheren Einrichtung geschickt werden. Werden solche Prüfbefehle beispielsweise zu einer Tageszeit geschickt, während der ein sehr geringer Verkehr herrscht, so ist damit zu rechnen, daß trotz gewissen zeitlichen Abstandes zwischen solchen Prüfbefehlen sie nicht durch andere zu übertragende Informationen abgewechselt werden. Der spätere Prüfbefehl, der inhaltlich mit dem vorhergehenden übereinstimmt, soll jedoch abermals die befohlene Prüfung veranlassen. Solche Prüfbefehle sind z.B. von einer zentralen Steuereinrichtung zu einer peripheren Einrichtung der Vermittlungsanlage zu übertragen. Ferner kann es sich hierbei z.B. um Wahlinformationen handeln, die inhaltlich übereinstimmen, weil sie zwei von einem Teilnehmer nacheinander gewählte Wahlziffern betreffen, die ziffernmäßig übereinstimmen. Solche Wahlinformationen sind beispielsweise von peripheren Einrichtungen zu einer zentralen Steuereinrichtung zu übertragen. Dabei ist jede durch eine derartige Wahlinformation übertragene Ziffer als eigene Wahlziffer in der Steuereinrichtung auszuwerten.

Bei einem Informationsübertragungssystem bekannter Art, das mit dem Prinzip der Übertragungswiederholung arbeitet und bei wiederholter Übertragung ein und derselben Information diese Wiederholungen nicht als lauter eigene neue Informationen werten darf, entstehen als grundsätzliche Probleme, wenn eine Information gleichen Inhaltes eigenständig zweimal oder mehrmals nacheinander zu übertragen ist. Dies kann der Fall sein, wenn die gleiche Wählziffer zweimal nacheinander gewählt wird, oder wenn ein Prüfbefehl, der ein erstes Mal zu einem ersten Zeitpunkt gegeben wird, wegen des Prinzips der Übertragungswiederholung anschließend immer wieder erneut übertragen wird, und wenn dieser Prüfbefehl, nachdem er ein erstes Mal schon ausgeführt ist, zu einem zweiten Zeitpunkt erneut gegeben werden soll, ohne daß zwischen dem ersten Prüfbefehl und dem zweiten Prüfbefehl — beide sind inhaltsgleich — ein anderes Signal übertragen worden ist. Es muß nun empfangsseitig erkennbar sein, inwieweit es sich bei den weiteren eintreffenden Informationen, die mit den vorausgehenden Informationen inhaltsgleich sind, nicht um bloße Wiederholungen, sondern um einen neuen Befehl gleichen Inhalts handelt oder nicht.

Für die Erfindung besteht die Aufgabe, ein Verfahren der oben angegebenen bekannten Art so weiterzubilden, daß Informationen über Zeitmultiplexkanäle mit jeweils mehrfacher Wiederholung übertragen werden, wobei jedoch neue Informationen nur einmal von der empfangenden Einrichtung aufzunehmen sind, und daß trotzdem inhaltlich übereinstimmende Informationen direkt nacheinander übertragen werden können, ohne daß dabei die Auswertung solcher Informationen unterdrückt wird.

Die Erfindung löst die gestellte Aufgabe dadurch, daß den in an sich bekannter Weise aus jeweils mehreren Bytes bestehenden und zur Übertragung bitweise in Speicherzellen eines Pufferspeichers eingegebenen und von diesem regelmäßig zyklisch weitergegebenen Informationen in der sendenden Einrichtung vor deren Weitergabe einzeln Nummernbytes hinzugefügt werden, die von einem Informationszähler geliefert werden und einer Numerierung jeder der Informationen dienen, und daß im Zusammenhang einer Eingabe neuer Informationen innerhalb beliebiger Weitergabeintervalle eine Vermischung von Informationsbestandteilen verschiedener Informationen dadurch vermieden wird, daß einerseits bei einem in ebenfalls an sich bekannter Weise mit Hilfe eines Pufferspeichers durchgeführten Informationsempfang in der empfangenden Einrichtung die zu neuen Informationen gehörenden Bytes jeweils nur einmal von einem entsprechenden Pufferspeicher aufgenommen werden, wobei die Wertung jeder Information als neue Information anhand sowohl der Informationsbytes als auch der Nummernbytes vorgenommen wird, und andererseits von dem Pufferspeicher der empfangenden Einrichtung neue Informationen jeweils erst nach Vollendung eines vollen Aufnahmezyklus zur Weiterverarbeitung ausgeliefert werden.

Dadurch, daß die zu übertragenden Informationen durch Nummernbytes ergänzt werden, wird zustande gebracht, daß auch inhaltlich sonst überinstimmende und nacheinander angelieferte Informationen sich derart unterscheiden, daß sie in der empfangenden Einrichtung als neue Informationen aufgenommen werden und dann auch dort weiterverarbeitet werden können. Dadurch, daß in der sendenden Einrichtung die neuen Informationen in beliebigen Weitergabeintervallen eingegeben werden, wird ein besonderer Zwischenspeicher eingespart, in welchem sie sonst vorübergehend bis zu einem geeigneten Zeitpunkt für ihre Aufnahme im Pufferspeicher aufzubewahren wären. Das erfindungsgemäße Verfahren löst also die gestellte Aufgabe und ist auch darüber hinaus vorteilhaft, Dadurch, daß von dem zur empfangenden Einrichtung gehörenden Pufferspeicher neue Informationen jeweils erst nach Vollendung eines vollen Aufnahmezyklus zur Weiterverarbeitung ausgeliefert werden, wird sichergestellt, daß diese Informationen bei der Auslieferung alle zugehörigen Bytes umfassen. Die Vollendung eines vollen Aufnahmezyklus kann beispielsweise mit Hilfe eines die Auslieferung bis dahin sperrenden Zeitgliedes sichergestellt werden.

In der empfangenden Einrichtung wird beispielsweise ein eingetroffenes Bytes jeweils mit dem im dortigen Pufferspeicher bereits enthaltenen entsprechenden Byte mit Hilfe eines Vergleichers verglichen und es wird nur bei einer Abweichung zwischen diesen beiden die Aufnahme des eingetroffenen Bytes in den Pufferspeicher anstelle des mit ohm verglichenen Bytes bewirkt. Dann werden die zu neuen Informationen gehörenden Bytes jeweils nur einmal vom betreffenden Pufferspeicher aufgenommen. Wird die Anlage derart eingerichtet, daß erst nach einer Wiederholung des Vergleichs vom Pufferspeicher aufgenommene Informationen ausgeliefert werden können, so wird dadurch auch die Vollendung eines vollen Aufnahmezyklus bis zur Auslieferung sichergestellt.

Beispiele füur die erfindungsgemäßen Maßnahmen bei einer Vermittlungsanlage und für die Arbeitsweise der davon betroffenen Einrichtungen werden im folgenden anhand der Figuren näher erläutert.

Figur 1 zeigt die Gliederung einer infrage kommenden Fernsprechvermittlungsanlage mit Zeitkanalkopplern.

Figur 2 zeigt eine Schaltungsanordnung mit den zur Durchführung des erfindungsgemäßen Verfahrens erforderlichen Einrichtungen.

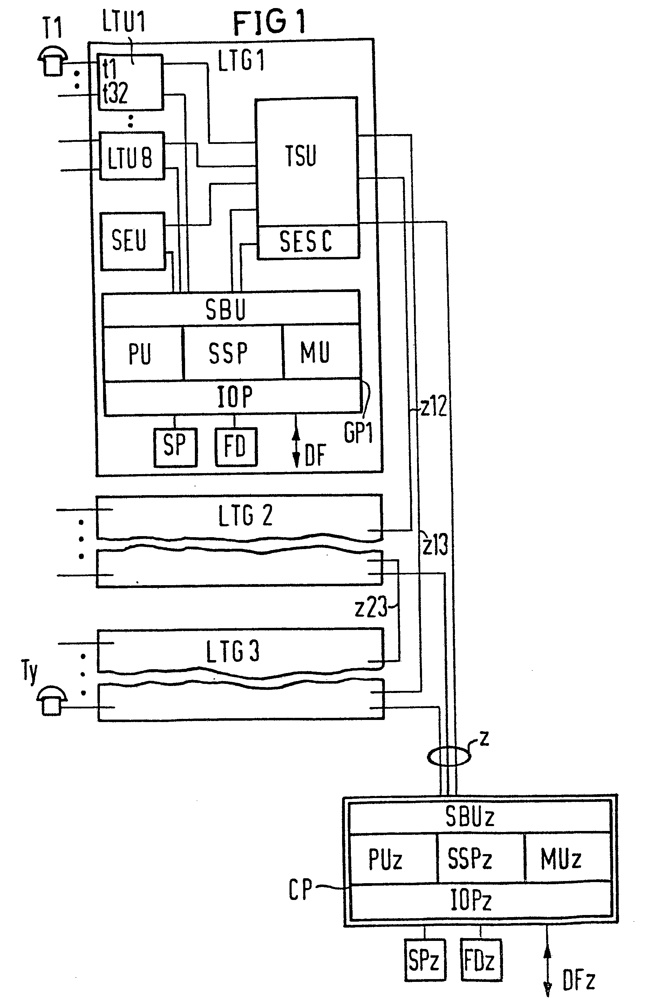

Zu der in Figur 1 gezeigten Vermittlungsanlage gehören die Anlagenteile LTG1, LTG2 und LTG3, an die einerseits die Teilnehmerstellen T1 ... Ty und andererseits über Steuerleitungen z das zentrale Steuerwerk CP angescholossen sind. Die verschiedenen Anlagenteile sind noch untereinander über die Zwischenleitungen z12, z13 und z23 verbunden. Jeder Anlagenteil hat ein eigenes dezentrales Steuerwerk. So hat der Anlagenteil LTG1 das dezentrale Steuerwerk GP1. Zu diesem Anlagenteil gehört ferner der Zeitkanalkoppler TSU, der mit der Kopplersteuerung SESC ausgerüstet ist. Die Kopplersteuerung SESC bekommt Einstellbefehle vom dezentralen Stuerwerk GP1. Die Teilnehmerstelle T1 ist bei dem Anlagenteil LTG1 über die Teilnehmeranschlußschaltung t1 an den Zeitkanalkoppler TSU angeschlossen. Die Teilenehmeranschlußschaltungen sind hier zu Mehrfachanschlußschaltungen gruppenweise zusammengefaßt. So sind die Teilnehmeranschlußschaltungen LTU1 zusammengefaßt. Es sind bei dem Anlagenteil LTG1 mehrere Mehrfachanschlußschaltungen vorgesehen, zu denen auch noch die Mehrfachanschlußschaltung LTU8 gehört. Es können auch entsprechende Mehrfachanschlußschaltungen vorgesehen sein, bei denen mehrere Verbindungsleitungsanschlußschaltungen zusammengefaßt sind, an die Verbindungsleitungen angeschlossen sind, die beispielsweise zu anderen Vermittlungsanlagen führen. An den Zeitkanalkoppler TSU ist ferner die Signalschaltung SEU angeschlossen, in der Tongenerator, Rufgenerator, Codesender- und -empfänger zusammengefaßt sind. Diese Signalschaltung kann demgemäß die verschiedenen Hörtöne sowie Rufzeichen und sonstigen benötigten Codezeichen liefern. Außerdem kann sie solche Zeichen auch für ihre Auswertung empfangen. Die Teilnehmer anschlußschaltungen t1 ... t32 und die weiteren sowie die Signalschaltung SEU sind an das Steuerwerk GP1 und an den Zeitkanalkoppler TSU angeschlossen.

**0011153**

Diese Einrichtungen können daher über den Zeitkanalkoppler TSU fallweise miteinander verbunden werden.

Außerdem können diese Einrichtungen auch Steuerinformationen mit dem Steuerwerk GP1 austauschen und zwar über den zugehörigen Informationspuffer SBU, mit dessen Hilfe ein störender Zeitzwang dabei vermieden wird. Zu diesem Steuerwerk gehört noch das Leitwerk SSP, das Verarbeitungswerk PU, der Arbeitsspeicher MU und die Ein-Ausgabesteuerung IOP, an die noch der Hintergrundspeicher FD und das Bediengerät SP angeschlossen sind. Dort ist noch der Datenfernübertragungsanschluß DF vorgesehen, über den gegebenenfalls mit anderen Vermittlungen Steuerdaten ausgetauscht werden können. Die in der Figur 1 gezeigten Anlagenteile LTG1, LTG2 und LTG3 sind in allen Kombinationen über die Zwischenleitungen z12, z13 und z23 verbunde, über die Zeitkanäle geführt sind. Außerdem sind die zugehörigen dezentralen Steuerwerke, wie das Steuerwerk GP1, mit dem entsprechend aufgebauten zentralen Steuerwerk CP verbunden.

Dieses zentrale Steuerwerk wirkt beim Aufbau und Abbau von Verbindungswegen mit, die über mindestens zwei der Anlagenteile LTG1, LTG2 und LTG3 führen. Dabei veranlaßt das zentrale Steuerwerk CP außerdem, daß die anderen Steuerwerke für den Aufbau und Abbau von Verbindungswegen sinngemäß in Anspruch genommen werden, wozu zwischen diesen Steuerwerken Steuerinformationen ausgetauscht werden. Zum zentralen Steuerwerk CP gehören der Informationspuffer SBUz, das Leitwerk SSPz, das Verarbeitungswerk PUz, der Speicher MUz und die Ein-Ausgabesteuerung IOPz, an die der Hintergrundspeicher FDz und das Bediengerät SPz angeschlossen sind.

Außerdem ist dort noch der Datenfernübertragungsanschluß DFz vorgesehen. Die dezentralen Steuerwerke, wie das Steuerwerk GP1, wicklen in jedem Fall solche Vermittlungsfunktionen ab, die für jede Verbindungsanforderung anfallen und die unter Zeitzwang stehen. Dazu gehören das Abfragen von Teilnehmerschaltungen, die Verarbeitung von Vermittlungsinformationen, die insbesondere von Teilnehmerschaltungen oder über Verbindungsleitungen geliefert werden, die Gebührenerfassung, wobei z.B. Gebührenimpulse gezählt werden, und die Lieferung von Einstellbefehlen für die Kopplersteuerung. Das zentrale Steuerwerk CP wickelt dagegen Vermittlungsfunktionen ab, die den Zusammenhang der Teileinrichtungen der Anlage und deren Zusammenhang mit anderen Anlagen berücksichtigen müssen. Dazu gehören die Bewertung von gewählten Ziffern von Rufnummern, die Suche von zu benutzenden Koppelfeldausgängen, die Suche und Auswahl von Verbindungswegen und die Leitweglenkung.

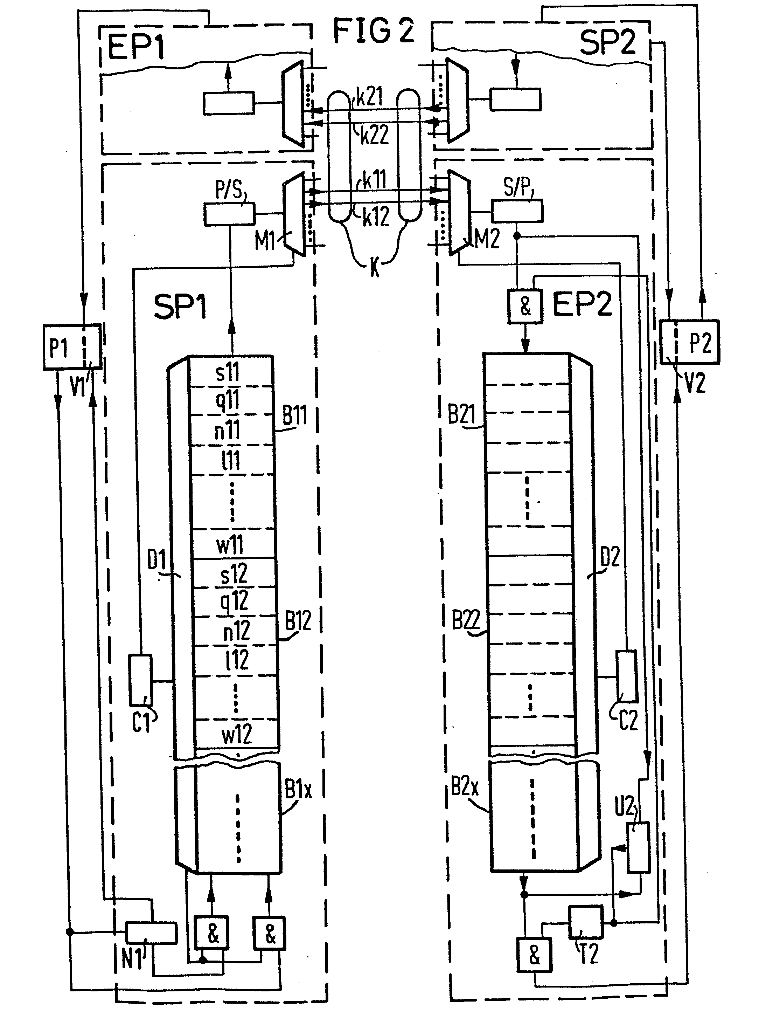

Die Figur 2 zeigt einen Auszug aus der in Figur 1 dargestellten Vermittlungsanlage. Bei diesem Auszug sind solche Schaltungsteile dieser Anlage verücksichtigt, mit deren Hilfe das erfindungsgemäße Verfahren erläutert werden kann. Demgemäß ist dort die Leitung K gezeigt, über die mehrere Zeitmultiplexkanäle geführt sind, zu denen die Zeitmultiplexkanäle k11 und k12 gehören, die von der sendenen Einrichtung SP1 zur empfangenden Einrichtung EP2 führen. Ferner gehören dazu die Zeitmultiplexkanäle k21 und k22, die von der sendenden Einrichtung SP2 zur empfangenden Einrichtung EP1 führen. Die beiden Einrichtungen SP1 und EP1 gehören zu ein und demselben Informationspuffer, ebenso gehören die Einrichtungen EP2 und SP2 zu demselben anderen Informationspuffer. Diese beiden Informationspuffer sind also über die Leitung K verbunden. Der Informationspuffer mit den Einrichtungen EP1 und SP1 ist mit dem Steuerwerk P1 verbunden, zu dem noch der Vergleicher V1 gehört. Der Informationspuffer mit den Einrichtungen EP2 und SP2 ist mit dem Steuerwerk P2 verbunden, zu dem der Vergleicher V2 gehört. Als Steuerwerke kommen das zentrale oder ein dezentrales Steuerwerk der in Figur 1 gezeigten Vermittlungsanlage infrage. Bei der Ausnutzung der die erwähnten Steuerwerke verbindenden Leitung K im Zeitmultiplexverfahren wirken hier Multiplexer mit, die zu den sendenden und empfangenden Einrichtungen gehören und an die diese Leitung K angeschlossen ist. So ist die Leitung K bei der sendenden Einrichtung SP1 an den Multiplexer M1 und bei der empfangenden Einrichtung EP2 an den Multiplexer M2 angeschlossen. Der Multiplexer M2 der empfangenden Einrichtung EP2 setzt in einer gewissen Anzahl von Zeitmultiplexkanälen ankommende Informationen derart um, daß sie über einen einzigen Zeitmultiplexkanal weitergegeben werden. Sie gelangen dann zum Serienparallelumsetzer S/P. Die zu einem Byte gehörenden mehreren Bits treffen bei diesem Serien/Parallelumsetzer seriell ein und werden von ihm parallel zum Pufferspeicher B21 ... B2x weitergegeben. Vom Pufferspeicher B11 ... B1x der sendenden Einrichtung SP1 werden entsprechende Bytes zunächst dem Parallel/Serien-Umsetzer P/S zugeführt, der dann die dazugehörigen Bits seriell zum Multiplexer M1 weitergibt. Dieser Multiplexer M1 setzt hier die auf einem einzigen Zeitmultiplexkanal ankommenden Informationen derart um, daß sie auf mehrere Zeitmultipleskanäle verteilt werden. In der Figur 2 ist auch angedeutet, daß Zeitmultiplexkanäle weiterer Leitungen auch zu anderen dort nicht gezeigten Multiplexern führen. Alle diese Multiplexer geben die byteweise gegliederten Informationen byteweise weiter.

Die zu einer Information gehörenden Bytes sind in dem Pufferspeicher B11 ... B1x der sendenden Einrichtung SP1 jeweils in einem Speicherplatz gesammelt. Dazu gehören die Speicherplätze B11, B12 ... B1x. Im Speicherplatz B11 befinden sich zunächst das Synchronisationsbyte s11, das Quittungsbyte q11, das Numerierungsbyte n11, das Längenbyte 111, ferner mehrere nicht bezeichnete den übrigen Inhalt der Meldung angebende Bytes und am Schluß das Prüfbyte w11. Jedes Byte befindet sich in einer eigenen Speicherzeile dieses Speicherplatzes. Im Speicherplatz B12 befinden sich die Bytes s12, q12, n12, 112 sowie weitere Bytes und das Byte w12. Diese Bytes haben jeweils die

4

ihrer Bezeichnung entsprechende Bedeutung. Mit Hilfe des Adressenzählers C1 und des Decoders D1 werden die verschiedenen Speicherzellen angesteuert und es wird dabei die Weitergabe von Bytes bewirkt. Die zu den verschiedenen Informationen gehörenden Bytes werden hier wegen des Zeitmultiplexbetriebes verschachtelt weitergegeben. Dementsprechend werden zunächst die verschiedenen Synchronisationsbytes s11, s12..., danach die verschiedenen Quittungsbytes q11, q12..., danch die verschiedenen Nummernbytes n11, n12... usw. weitergegeben, bis schließlich die verschiedenen Prüfbytes w11, w12... weitergegeben werden. Falls es sich als zweckmäßig erweist, können die verschiedenen Bytes auch entsprechend ihrer Weitergabe in Speicherplätzen zusammengefaßt sein. Die Numerierungsbytes werden hier dem Pufferspeicher B11...B1x vom Nummerngenerator N1 zugeliefert, während die übrigen Bytes vom Steuerwerk P1 geliefert werden. Die Zulieferung geschieht über zwei UND-Glieder, die dann jeweils zu geeigneten Zeitspannen vom Decoder D1 zusätzlich angesteuert werden, damit zu diesen Zeitspannen vom Pufferspeicher B11...B1x die anstehenden Bytes aufgenommen werden. Zu neuen Informationen gehörende Bytes können in beliebigen Weitergabeintervallen eingegeben werden.

Wegen des Zeitmultiplexbetriebes werden die verschiedenen sich bereits im Pufferspeicher befindlichen Bytes über den Parallel-Serien-Umsetzer P/S und dem Multiplexer M1 wiederholt zur empfangenden Einrichtung EP2 weitergegeben. Dabei kann beispielsweise zwischen der Weitergabe der Bytes n11 und n12 eine neue Information in den Speicherplatz B11 eingegeben werden. Dies hat zur Folge, daß während des dabei gerade abgewickelten Weitergabezuklus für die Bytes s11...w11 zunächst die Bytes s11, q11 und n11 der vorherigen Information und danach die Bytes l11...w11 der neuen Information weitergegeben werden. Deshalb werden von dem Pufferspeicher B21...B2x, zu dem diese Bytes übertragen werden, dort neu eingetroffene Informationen jeweils erst nach Vollendung eines vollen Aufnahmezyklus zur Weiterverarbeitung ausgeliefert. Dadurch wird sichergestellt, daß sich dann in dem Speicherplatz B21, zu dem z.B. die zu einer neuen Information gehörenden Bytes übertragen worden sind, nur zu einer neuen Information gehörende Bytes enthalten sind.

Die Multiplexer M1 und M2 werden synchron betrieben. Sie sind hierfür jeweils mit dem zugehörigen Adressenzähler verbunden, also der Multiplexer M1 mit dem Adressenzähler C1 und der Multiplexer M2 mit dem Adressenzähler C2 der empfangenden Einrichtung EP2. Der Synchronismus wird außerdem noch mit Hilfe der Synchroniserzeichen s11 usw. sichergestellt. Dies hat zur Folge, daß die in einer Speicherzelle eines Speicherplatzes des Pufferspeichers B11...B1x enthaltenen Informationen jeweils in die entsprechende Speicherzelle des entsprechenden Speicherplatzes des Pufferspeichers B21...B2x der empfangenden Einrichtung EP2 gelangen. Die Bytes, welche von den hier nicht gezeigten Multiplexern anderer Einrichtungen geliefert werden, können über Zeitmultiplexkanäle übertragen werden, die sinngemäß zwischen die für die Einrichtungen SP1 und EP2 gemeinsam benutzten Zeitmultiplexkanäle zeitlich verschachtelt eingefügt sind. Auch dort wird der regelmäßig zyklische Betrieb von Pufferspeichern zur byteweisen Weitergabe von Informationen ausgenutzt, die ihrerseits zunächst byteweise in Speicherzellen eines Pufferspeichers eingegeben worden sind. Dieser regelmäßig zyklische Betrieb wird auch abgewickelt, wenn Informationen übertragen werden, bei denen die Anzahl der zugehörigen Bytes kleiner als die maximale Anzahl ist, die sich nach der Anzahl der zu einem Speicherplatz gehörenden Speicherzellen richtet.

In der empfangenden Einrichtung EP2 wird der zugehörige Pufferspeicher B21...B2x mit Hilfe des Adressenzählers C2 und des Decoders D2 betrieben. Ein eingetroffenes und vom zugehörigen Serien/Parallel-Umsetzer S/P geliefertes Byte wird dabei jeweils mit dem im dortigen Pufferspeicher bereits enthaltenen entsprechenden Byte mit Hilfe des Vergleichers U2 verglichen. Bei Ungleichheit liefert der Vergleicher U2 ein Signal zu dem UND-Glied, welches dem Pufferspeicher B21...B2x vorgeschaltet ist, und veranlaßt dadurch, daß das eingetroffene Byte über dieses UND-Glied zum Pufferspeicher selber weitergegeben wird und dort eingespeichert wird. Außerdem gelangt das vom Vergleicher U2 gelieferte Signal auch zum Zeitglied T2 und wird von dort nach Ablauf eines vollen Aufnahmezyklus zu demjenigen UND-Glied weitergeleitet, das auch am Ausgang des Pufferspeichers B21...B2x angeschlossen ist. Es können dann zu einer neuen eingetroffenen Information gehörende Bytes während eines Aufnahmeintervalles vom Pufferspeicher B21...B2x ausgeliefert werden. Sie gelangen hier zum Steuerwerk P2.

Bie dem vorstehend anhand der Figur 2 erläuterten Ausführungsbeispiel für das erfindungsgemäße Verfahren werden also in den Pufferspeicher B11...B1x der sendenden Einrichtung SP1 mehrere aus jeweils mehreren Bytes s11...w11, s12...w12...bestehende Informationen eingegeben. Sie sind dann dort zugleich enthalten. Sie werden dann zur selben Einrichtung EP2 oder auch zu unterschiedlichen Einrichtungen übertragen. Dabei werden sie über einen im Übertragungsweg dem Pufferspeicher B11...B1x vorgeschalteten Parallel/Serien-Umsetzer P/S und über einen vorgeschalteten Multiplexer M1 übertragen. Der Multiplexer M1 verteilt die Informationen auf verschiedene zu den empfangen Einrichtungen führende Zeitmultiplexkanäle, wie die Zeitmultiplexkanäle k11, k12. Bei der empfangenden Einrichtung EP2 werden sie über einen dem zugehörigen Pufferspeicher B21...B2x vorgeschalteten Multiplexer M2 und über den Serien/Parallel-Umsetzer S/P empfangen. Der Multiplexer M2 gibt die Information in den Zeitmultiplexkanälen entsprechend nacheinander zu den zugeordneten Speicherzellen des Pufferspeichers B21...B2x weiter.

Wie bereits erwähnt, können in die zu übertragenden Informationen auch Quittungsbytes, wie die

**0011153**

Quittungsbytes q11 und q12 eingefügt sein. Solche Quittungsbytes können den richtigen Empfang von Informationen quittieren, die vorher über einen weiteren Zeitmultiplexkanal empfangen worden sind, über den die beiden beteiligten Einrichtungen zusätzlich verbunden sind. Ein derartiger Zeitmultiplexkanal wird bei der Anordnung gemäß Figur 2 beispielsweise durch den Zeitmultiplexkanal k21 dargestellt. Über diesen Zeitmultiplexkanal k21 sind die sendende Einrichtung SP2 und die empfangene Einrichtung EP1 verbunden. Über diesen Zeitmultiplexkanal werden in entsprechender Weise, wie es bereits beschrieben worden ist. Informationen aus mehreren Bytes übertragen. Sie gelangen dann auch zum Steuerwerk P1, welches Quittungsbytes in Informationen einfügen kann, welche von der Einrichtung SP1 zur Einrichtung EP2 übertragen werden. Von der Einrichtung EP2 gelangen diese Quittungsbytes dann auch zum Steuerwerk P2. Dem Steuerwerk P2 wird damit bestätigt, daß von ihm vorher gelieferte Informationen richtig bei der empfangen Einrichtung angekommen sind. Zweckmäßigerweise wird ein Quittungsbyte jeweils mit Hilfe des Nummernbytes der quittierten Information in der diese Information empfangenen Einrichtung gebildet. Enthält das Quittungsbyte dieses Nummernbyte selber, so kann bei der empfangenden Einrichtung durch Vergleich des Quittungsbytes mit dem Nummernbyte einer zuletzt gesendeten Information festgestellt werden, daß diese Information richtig bei der empfangenden Einrichtung angekommen ist. Hierzu ist der Nummerngenerator N1 der Einrichtung SP1 noch mit dem Vergleicher V1 beim Steuerwerk P1 verbunden. Dem Vergleicher V1 werden auch empfangene Quittungsbytes zugeführt. Beim Vergleich ergibt sich dann gegebenenfalls, daß die Übertragung der mit dem beim Vergleich berücksichtigten Nummernbytes versehenen Information richtig beendet ist. Bei dem Steuerwerk P2 ist der Vergleicher V2 vorgesehen, der in entsprechender Weise ausgenutzt wird. Vorteilhafterweise kann die betreffende Einrichtung den Empfang eines Quittungsbytes auch als Signal dafür auswerten, daß der für Übertragung der quittierten Information benutzte Zeitmultiplexkanal für die Übertragung einer weiteren Information freigeworden ist. So kann z.B. mit Hilfe des Quittungsbytes q11 bei der empfangenden Einrichtung EP2 bzw. bei dem zugehörigen Steuerwerk P2 festgestellt werden, daß eine vorher über den Zeitmultiplexkanal k21 geschickte Information richtig angekommen ist und daß nunmehr der Zeitmultiplexkanal k21 für die Übertragung der nächsten Information freigeworden ist. Die wiederholte Übertragung der quittierten Information wird abgebrochen.

In der empfangenden Einrichtung kann der richtige Empfang einer aus mehreren Bytes bestehenden Information mit Hilfe des Prüfbytes festgestellt werden. Zweckmäßigerweise wird bei dem hier beschriebenen Ausführungsbeispiel das Prüfbyte aus den dem Längenbyte und den folgenden Bytes der zu übertragenden Information in der sendenden Einrichtung gebildet. In der empfangenden Einrichtung wird in entsprechender Weise ein Prüfbyte gebildet und mit dem empfangenen Prüfbyte verglichen. Bei Übereinstimmung kann damit gerechnet werden, daß die übertragene Information richtige empfangen worden ist. Darüber hinaus kann auch geprüft werden, ob es sich um Informationen handelt, die einen Inhalt haben, der von der sendenden Einrichtung wirklich gesendet werden darf. Ist dies nicht der Fall, so kann auch daraus geschlossen werden, daß ein Fahler aufgetreten ist.

Ein Steuerwerk, das letzten Endes die zu übertragenden Informationen liefert, gehört bei den hier beschriebenen Beispielen zu einer Fernsprechvermittlungsanlage. Das den Betriebsablauf des Steuerwerks steuernde Leitwerk kann dabei die zu übertragenden Informationen entsprechend seinem Arbeitsrhythmus von Speicherplätzen seines Arbeitsspeichers abholen und zum Pufferspeicher der sendenden Einrichtung schicken. Bei einem Steuerwerk, zu dem Informationen letzten Endes geschickt werden, können von seinem Leitwerk die im Pufferspeicher der empfangenen Einrichtung enthaltenen Informationen entsprechend seinem Arbeitsrhythmus zur Weiterverarbeitung abgeholt werden. Bei einer solchen Fernsprechvermittlungsanlage gehören zu den die verschiedenen Einrichtungen verbindenden Zeitmultiplexkanäle auch solche, welche zur Übertragung von Gesprächen ausgenutzt werden, wobei die PCM-Technik ausgenutzt werden kann.

**Patentansprüche**

1. Verfahren zur Übertragung Informationen zwischen Einrichtungen einer indirekt gesteuerten Vermittlungsanlage über Zeitmultiplexkanäle mit jeweils mehrfacher Wiederholung der Informationen, insbesondere für eine Fernsprechvermittlungsanlage, die mit Zeitkanalkopplern ausgerüstet ist, dadurch gekennzeichnet, daß den in an sich bekannter Weise aus jeweils mehreren Bytes bestehenden und zur Übertragung bitweise in Speicherzellen eines Pufferspeichers (B11,...B1x) eingegebenen und von diesem regelmäßig zyklisch weitergegebenen Informationen in der sendenden Einrichtung (SP1) vor deren Weitergabe einzeln Nummernbytes (n11,...n12) hinzugefügt werden, die von einem Informationszähler (N1) geliefert werden und einer Numerierung jeder der Informationen dienen, und daß im Zusammenhang einer Eingabe neuer Informationen innerhalb beliebiger Weitergabeintervalle eine Vermischung von Informationsbestandteilen verschiedener Informationen dadurch vermieden wird, daß einerseits bei einem in ebenfalls an sich bekannter Weise mit Hilfe eines Pufferspeichers (B21,...B1x) durchgeführten Informationsempfang in der empfangenden Einrichtung (EP2) die zu neuen Informationen gehörenden Bytes jeweils nur einmal von einem entsprechenden Pufferspeicher (B21...B2x) aufgenommen werden, wobei die Wertung jeder Information als neue Information anhand sowohl der Informationsbytes als auch der Nummernbytes vorgenommen wird, und

6

andererseits von dem Pufferspeicher (B21,...B1x) der empfangenden Einrichtung (EP2) neue Informationen jeweils erst nach Vollendung eines vollen Aufnahmezyklus zur Weiterverarbeitung ausgeliefert werden.

2. Verfahren nach Anspruch 1, dadurch gekennzeichnet, daß in der empfangenden Einrichtung (EP2) ein engetroffenes Bytes jeweils mit dem im dortigen Pufferspeicher (B21...B2x) bereits enthaltenen entsprechenden Byte mit Hilfe eines Vergleichers (U) verglichen wird und daß bei einer Abweichung zwischen diesen Bytes die Aufnahme des eingetroffenen Bytes in den Pufferspeicher (B21...B2x) anstelle des mit ihm verglichenen Bytes bewirkt wird.

3. Verfahren nach Anspruch 1 oder 2, dadurch gekennzeichnet, daß vom Pufferspeicher (B21...B2x) der empfangenden Einrichtung (EP2) Informationen während Aufnahmeintervallen ausgeliefert werden.

4. Verfahren nach einem der vorhergehenden Ansprüche, dadurch gekennzeichnet, daß die zu einem Byte gehörenden Bits von den Pufferspeichern (B11...B1x, B21...B2x) jeweils parallel aufgenommen bzw. weitergeben werden, daß sie unter Mitwirkung eines an den Pufferspeicher (B11...B1x) der sendenden Einrichtung (SP1) angeschlossenen Parallel-Serien-Umsetzer (P/S) und eines an den Pufferspeicher (B21...B2x) der empfangenden Einrichtung (EP2) angeschlossenen Serien/Parallel-Umsetzer (S/P) seriell über einen Zeitmultiplexkanal (k11) einer zeitmultiplexweise ausgenutzten Leitung (K) übertragen werden.

5. Verfahren nach einem der vorhergehenden Ansprüche, dadurch gekennzeichnet, daß in den Pufferspeicher (B11...B1x) der sendenden Einrichtung (SP1) mehrere aus jeweils mehreren Bytes bestehende Informationen eingegeben werden und zugleich dort enthalten sind, die zur selben oder auch zu unterschiedlichen Einrichtungen übertragen sind, daß sie über einen im Übertragungsweg diesem Pufferspeicher (B11...B1x) vorgeschalteten Multiplexer (M1) übertragen werden, der die Informationen auf verschiedene zu den empfangenden Einrichtungen führende Zeitmultiplexkanäle (k11,...k12,...) verteilt, bei denen jeweils über einen dem zugehörigen Pufferspeicher (z.B. B21...B2x) vorgeschalteten Multiplexer (M2) empfangen werden, der die Informationen den Zeitmultiplexkanälen entsprechend nacheinander zu den zugeordneten Speicherzellen des dortigen Pufferspeichers (B21...B2x) weitergibt.

6. Verfahren nach einem der vorhergehenden Ansprüche, dadurch gekennzeichnet, daß in die zu übertragenden Informationen Quittungsbytes (q11, q12) eingefügt werden, welche den richtigen Empfang von Informationen quittieren können, die vorher über einen weiteren Zeitmultiplexkanal (k21) empfangen worden sind, über den die beteiligten Einrichtungen zusätzlich verbunden sind, und daß die Quittungsbytes (q11, q12) mit Hilfe der Nummernbytes der quittierten Informationen in der solche Informationen empfangenden Einrichtung gebildet werden.

7. Verfahren nach einem der vorhergehenden Ansprüche, dadurch gekennzeichnet, daß die betreffende Einrichtung (EP2) den Empfang eines Quittungsbytes auch als Signal dafür auswerten kann, daß der für die Übertragung der quittierten Information benutzte Zeitmultiplexkanal (k21) für die Übertragung einer weiteren Information frei geworden ist.

8. Verfahren nach einem der vorhergehenden Ansprüche, bei dem die zu übertragenden Informationen von einem Steuerwerk einer Fernsprechvermittlungsanlage geliefert werden, dadurch gekennzeichnet, daß das den Betriebsablauf des Steuerwerks (P1) steuernde Leitwerk die zu übertragenden Informationen entsprechend seinem Arbeitsrhythmus von Speicherplätzen seines Arbeitsspeichers abholt und zum Pufferspeicher (B11...B1x) schickt.

9. Verfahren nach einem der vorhergehenden Ansprüche, bei dem die Informationen zu einem Steuerwerk einer Fernsprechvermittlungsanlage übertragen werden, dadurch gekennzeichnet, daß die in einem Pufferspeicher (B21...B2x) enthaltenen Informationen vom Leitwerk des Steuerwerks (P2) entsprechend seinem Arbeitsrhythmus zur Weiterverarbeitung abgeholt werden.

**Revendications**

1. Procédé pour transmettre des informations entre des dispositifs d'une installation de commutation à commande indirecte, par l'intermédiaire de canaux de multiplexage temporelsavec répétition multiple des informations, notamment pour une installation de commutation téléphonique, qui est équipée de coupleurs de canaux temporels, caractérisé par le fait qu'aux informations constituées d'une manière connue en soi par plusieurs octets et introduites pour la transmission bit par bit dans des cellules de mémoire d'une mémoire tampon (B11...B1x) et retransmises d'une façon cyclique et régulière à partir de cette mémoire, sont ajoutés individuellement dans le dispositif émetteur (SP), avant leur retransmission, des octets de numérotation (n11...N12) qui sont délivrés par un compteur d'informations (N1) et servent à réaliser une numérotation des informations, et qu'en rapport avec l'introduction de nouvelles informations pendant à un intervalle quelconque de retransmission, un mélange de parties constitutives de différentes informations est évité grâce au fait que d'une part dans le cas d'une réception d'informations effectuée également de façon connue en soi à l'aide d'une mémoire tampon (B21...B1x), dans le dispositif récepteur (EP2) les octets faisant partie de nouvelles informations ne sont reçus qu'une fois par une mémoire tampon correspondante (B21...B2x), l'évaluation de chaque information en tant que nouvelle information étant réalisée sur la base aussi bien des octets d'informations que des octets de numérotation, et que d'autre part de nouvelles informations ne sont délivrées, en vue de leur traitement ultérieur, qu'après l'achèvement d'un cycle complet de réception, par la mémoire tampon (B21 ... B1x) du dispositif récepteur (EP2).

2. Procédé selon la revendication 1, caractérisé par le fait que dans le dispositif récepteur (EP2), un octet arrivé est comparé, à l'aide d'un comparateur (U), à l'octet correspondant déjà contenu dans la mémoire tampon (B21 ... B2x) située dans ce dispositif et que dans le cas d'un écart entre ces octets, il se produit la réception de l'octet arrivé, et non de l'octet qui lui est comparé, dans la mémoire tampon (B21 ... B2x).

3. Procédé selon la revendication 1 ou 2, caractérisé par le fait que des informations sont délivrées pendant des intervalles de réception, par la mémoire tampon (B21 ... B1x) du dispositif récepteur (EP2).

4. Procédé selon l'une quelconque des revendications précédentes, caractérisé par le fait que les bits faisant partie d'un octet sont reçus ou retransmis respectivement en parallèle par les mémoires tampons (B11 ... B1x, B21 ... B2x), et qu'ils sont transmis en série par l'intermédiaire d'un canal de multiplexage temporel (k11) d'une ligne (K) utilisée selon un mode de multiplexage temporel, moyennant, l'intervention d'un convertisseur parallèle/série (P/S) raccordé à la mémoire tampon (B11 ... B1x) du dispositif émetteur (SP1), et d'un convertisseur série/parallèle (S/P) raccordé à la mémoire tampon (B21 ... B2x) du dispositif réceptuer (EP2).

5. Procédé selon l'une des revendications précédentes, caractérisé par le fait que dans la mémoire tampon (B11 ... B1x) du dispositif émetteur (SP1) sont introduites et se trouvent simultanément contenues plusieurs informations constituées chacune de plusieurs octets et qui sont transmises aux mêmes dispositifs ou également à des dispositifs différents, que ces informations sont transmises au moyen d'un multiplexeur (M1) qui est branché en amont de cette mémoire tampon (B11 ... B1x) dans la voie de transmission et qui répartit les informations dans différents canaux de multiplexage temporels (k11, k12 ...) aboutissant aux dispositifs récepteurs et dans les quels elles sont reçues respectivement par l'intermédiaire d'un multiplexeur (M2) branché en amont de la mémoire tampon associée (par exemple B21 ... B2x) et qui retransmet les informations successivement, conformément aux canaux de multiplexage temporels, aux cellules associées de mémoire de la mémoire tampon (B21 ... B2x) si-dans lesdits dispositifs récepteurs.

6. Procédé selon l'une des revendications précédentes, caractérisé par le fait que dans les informations devant être transmises sont introduits des octets d'accusé de réception (q11, q12) qui peuvent confirmer la réception correcte d'informations qui ont été reçues antérieurement par l'intermédiaire d'un autre canal de multiplexage temporel (k21), par l'intermédiaire duquel les dispositifs participants sont reliés en supplément et que les octets d'accuse de réception (q11, q12) sont formés à l'aide d'un octet de numérotation des informations confirmées, dans le dispositif recevant de telles informations.

7. Procédé selon l'une des revendications antérieures, caractérisé par le fait que le dispositif (EP2) concerné peut évaluer la réception d'un octet d'accusé de réception également sous la forme d'un signal indiquant le fait que le canal de multiplexage temporel (k21) utilisé pour la transmission de l'information confirmée a été libéré pour la transmission d'une autre information.

8. Procédé selon l'une des revendications précédentes, selon lequel les informations devant être transmises sont délivrées par une unité de commande d'une installation de commutation téléphonique, caractérisé par le fait que l'organe de commande commandant l'exécution du fonctionnement de l'unité de commande (P1) extrait, conformément à son rythme de travail, les informations devant être transmises, à partir des cases de mémoire de ces mémoires de travail et les envoie à la mémoire tampon (B11 ... B1x).

9. Procédé selon l'une des revendications précédentes, selon lequel les informations sont transmises à une unité de commande d'une installation de commutation téléphonique, caractérisé par le fait que les informations contenues dans les mémoires tampon (B21 ... B2x) sont extraites par l'organe de commande de l'unité de commande (P2) conformément à son rythme de travail, en vue de leur traitement ultérieur.

## Claims

1. Method for the transmission of information items between devices of an indirectly controlled exchange system via t.d.m. channels in each case involving multiple repetition of the information items, in particular for a telephone exchange system which is equipped with time channel couplers, characterised in that number bytes, which are supplied by an information counter (N1) and which serve to number each of the information items, are individually attached to the information items, which each consist, in known manner, of a plurality of bytes and, for transmission purposes, are input bit-wise into storage cells of a buffer store (B11, ... B1x) and are forwarded from the latter in a regular cycle, said attachment taking place in the transmitting device (SP1) prior to the forwarding of the information items, and that in association with the input of new information items within arbitrary forwarding intervals, mixing of information components of different information items is avoided in that on the one hand in the event of information reception which is carried out in the receiving device (EP2) in known manner with the assistance of a buffer store (B21, ... B1x), the bytes belonging to new information items are each received only once by a respective buffer store (B21 ... B2x) and the evaluation of each information item as a new information item is carried out both on the basis of the information bytes and the number bytes, and on the other hand the buffer store (B21, ... B1x) of the receiving device (EP2) does not supply new information items for further processing until the completion of a full receiving cycle.

2. Method as claimed in claim 1, characterised in that in the receiving device (EP2) a byte, having arrived, is compared, with the assistance of a comparator (U), with the corresponding byte already contained in the buffer store (B21 ... B2x) therein, and that in the event of a discrepancy between these bytes, the byte which has arrived is received into the buffer store (B21 ... B2x) in place of the byte with which it has been compared.

3. Method as claimed in claim 1 or 2, characterised in that the buffer store (B21 ... B2x) of the receiving device (EP2) supplies information items during pauses in reception.

4. Method as claimed in one of the preceding claims, characterised in that the bits which form a byte are received and forwarded in parallel by the buffer stores (B11 ... B1x, B21 ... B2x), and that with the assistance of a parallel-series converter (P/S) which is connected to the buffer store (B11 ... B1x) of the transmitting device (SP1) and a series-parallel converter (S/P) which is connected to the buffer store (B21 ... B2x) of the receiving device (EP2) they are transmitted in serial fashion via a t.d.m. channel (k11) of a line (K) employed t.d.m.-wise.

5. Method as claimed in one of the preceding claims, characterised in that a plurality of information items, each of which consists of a plurality of bytes, are input into the buffer store (B11 ... B1x) of the transmitting device (SP1) and are together contained therein, and are transmitted to the same or to different devices, that these are transmitted via a multiplexer (M1) which precedes this buffer store (B11 ... B1x) in the transmission path and which distributes the information items between various t.d.m. channels (k11, k12 ...) which leads to the receiving devices in which reception takes place via a multiplexer (M2) which precedes the associated buffer store (e.g. B21 ... B2x) and which forwards the information items consecutively, in accordance with the t.d.m. channels, to the assigned storage cells of the buffer store (B21 ... B2x).

6. Method as claimed in one of the preceding claims, characterised in that acknowledgement bytes (q11, q12) are inserted into the information items which are to be transmitted, which acknowledgement bytes are capable of acknowledging the correct reception of information items which have been previously received via a further t.d.m. channel (k21) by means of which the participating devices are additionally connected, and that the acknowledgement bytes (q11, q12) are formed with the assistance of the number bytes of the acknowledged information items in the device which receives these information items.

7. Method as claimed in one of the preceding claims, characterised in that the device (EP2) in question can also analyse the reception of an acknowledgement byte as a signal that the t.d.m. channel (k21) used to transmit the acknowledged information item has been released to transmit a further information item.

8. Method as claimed in one of the preceding claims, wherein the information items which are to be transmitted are supplied by a control unit of a telephone exchange system, characterised in that the command unit which controls the operating flow of the control unit (P1) obtains the information items which are to be transmitted in accordance with its operating rhythm from storage positions of a working store and transmits these to the buffer store (B11 ... B1x).

9. Method as claimed in one of the preceding claims, wherein the information items are transmitted to a control unit of a telephone exchange system, characterised in that the information items contained in a buffer store (B21 ... B2x) are obtained for further processing by the command unit of the control unit (P2) in accordance with its operating rhythm.

# FIG 1

FIG 2

0011 153

2